# EUROPEAN PATENT APPLICATION

(11) **EP 4 215 510 A1**
(43) Date of publication of application: **26.07.2023**
(21) Application number: 22152712.0
(22) Date of filing: 21.01.2022
(51) Int. Cl.: C05B 7/00, C05C 1/02, C05C 3/00, C05C 9/00

(54) **METHOD FOR PRODUCING COLORED PARTICLES**

(71) Applicant: Yara International ASA, 0277 Oslo (NO)
(72) Inventor: Grue, Øivind, Stathelle (NO); Bøyesen, Jan, Porsgrunn (NO)
(74) Representative: De Clercq & Partners

(57) **Abstract**

The present application provides a method for the continuous production of colored particles. The color is provided by two colorant compositions wherein one colorant composition is added into the molten composition to be transformed into particles, and the other colorant composition is added as a coating onto the particles. The present application also provides a production assembly to perform said method and a solid, particulate composition.

## Description

### Field of the invention

The present invention is related to the production of solid, colored particles, in particular solid, colored fertilizer particles.

### Background of the invention

Today, a large variety of industrial products, such as pharmaceuticals, fertilizers, or detergents, are manufactured as solid particles, and it may be desirable to add a colorant composition so that the solid particles have a particular, defined color.

Production of these particles often requires several steps, wherein the intermediate composition goes through different equipment to reach its final chemical content and shape.

There are two main ways to give solid particles a particular color: the colorant composition can be added during the production of the particles, where the colorant composition is homogeneously mixed with the rest of the components of the composition before the composition is transformed into solid particles, or the colorant composition can be applied to the finished particles as a coating.

Adding the colorant composition during production may be an advantage as it does not require an additional step, but the coating option is also interesting as it provides flexibility to the process, i.e. the same particles can be coated with different colors, and the colorant composition does not contaminate the entire production system.

It was observed that adding a colorant composition during the production of solid particles, in particular solid, fertilizer particles, could contaminate the production system, in particular the batch of product produced just after the batch of colored particles. This was in particular observed in production using a continuous process wherein the colorant composition would leach from the composition and contaminate the next batch. However, due to the ease of addition during production, it was still desirable to produce most of the solid particles via this melt coloring process.

### Summary of the invention

The present inventors realized that it was possible to produce solid, colored particles by combining the addition of a colorant to the production process for a portion of the amount of colored, solid particles to be produced and the application of a colorant coating to the remaining particles.

In a first aspect, the present disclosure provides a method for the continuous production of colored particles, comprising the steps of:
a) continuously providing a molten composition with a first color;
b) continuously adding a first colorant composition comprising a first coloring agent with a pigment number, to the molten composition;
c) continuously mixing the first colorant composition with the molten composition, thereby obtaining a molten composition with a second color;
d) continuously solidifying the molten composition with the second color, thereby obtaining particles with the second color;
e) stopping the addition of the first colorant composition to the molten composition;
f) carrying on the solidification of the molten composition, thereby obtaining particles with the first color;
g) coating the particles obtained in step f) with a second colorant composition comprising a second coloring agent with the pigment number of the first coloring agent, thereby obtaining particles with the second color.

In another aspect, the present disclosure provides a production assembly comprising:
- a liquid section arranged to produce a molten composition to be solidified, the liquid section comprising an outlet for a molten composition;
- a means for adding a colorant composition into a molten composition, connected to the liquid section;
- a solidification section comprising an inlet for a composition to be solidified, and an outlet for solid particles; wherein the means for adding a colorant composition into a molten composition is connected to the inlet of the solidification section;
- a means for coating solid particles;
- a means for storing solid particles;
- a means for directing solid particles from the outlet of the solidification section to either the means for coating solid particles or the means 6 for storing solid particles.

### Brief description of the figures

The following description of the figure of a specific embodiment of a system according to the present disclosure is only given by way of example and is not intended to limit the present explanation, its application or use. In the figure, identical reference numerals refer to the same or similar parts and features.

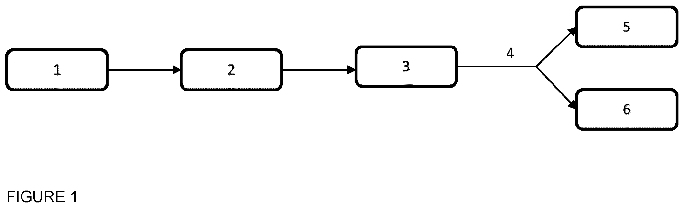

Figure 1 represents an embodiment of a production assembly according to the present disclosure.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the formulation.

In a first aspect, the present disclosure provides a method for the continuous production of colored particles, comprising the steps of:
a) continuously providing a molten composition with a first color;
b) continuously adding a first colorant composition comprising a first coloring agent with a pigment number, to the molten composition;
c) continuously mixing the first colorant composition with the molten composition, thereby obtaining a molten composition with a second color;
d) continuously solidifying the molten composition with the second color, thereby obtaining particles with the second color;
e) stopping the addition of the first colorant composition to the molten composition;
f) carrying on the solidification of the molten composition, thereby obtaining particles with the first color;
g) coating the particles obtained in step f) with a second colorant composition comprising a second coloring agent with the pigment number of the first coloring agent, thereby obtaining particles with the second color.

The method starts from a molten composition. A molten composition refers to a composition comprising components having a melting temperature above ambient temperature in a liquid state. The content of the molten composition may depend on the nature of the particles that need to be produced. In the fertilizer industry, the molten composition may comprise one or more primary nutrient, nitrogen, phosphorus, and potassium. In one embodiment, the molten composition comprises a component selected from the group consisting of ammonium salts, nitrate salts, phosphate salts, sulphate salts and urea. In one embodiment, the molten composition comprises a component selected from the group consisting of urea, ammonium nitrate, ammonium sulphate, ammonium phosphate, and mixtures thereof.

Methods to prepare such molten composition are known in each relevant field. In one embodiment, the molten composition is obtained by mixing a base, such as ammonia, with an inorganic acid, in particular an inorganic acid selected from the group consisting of nitric acid, sulphuric acid, and phosphoric acid. In one embodiment, the molten composition is obtained by mixing an inorganic acid, in particular an inorganic acid selected from the group consisting of nitric acid, sulphuric acid, and phosphoric acid, with a phosphorus source, in particular wherein the phosphorus source is selected from the group consisting of phosphate rock, and ashes.

A first colorant composition comprising a first coloring agent with a pigment number is continuously added to the molten composition and continuously mixed with the molten composition, so that the first colorant composition is evenly distributed in the molten composition. The molten composition now has a homogeneous color that is resulting from the interaction of the first coloring agent with the molten composition. For example, if the molten composition has a natural white, grey or off-white color, the molten composition with the first coloring agent has a color which is a tint of the color of the first coloring agent.

Coloring agents are widely used today in a variety of products and are commercially available. Two main categories of coloring agents can be used: a dye or a pigment. A dye is a chemical, often a small organic molecule, soluble in a solvent, for example water, whereas a pigment is often not soluble in water. A coloring agent is characterized by its pigment code and pigment number. A pigment code refers to the general color of the coloring agent, the pigment code can be one of the following ten codes: yellow, orange, red, violet, blue, green, brown, black, white, and metal. However, within each code, there are a wide range of shades and tints, so each coloring agent also has a pigment number which further specifies the tint or shade of the coloring agent.

As used herein, the term "color" refers to the color of an object as interpreted by the human eye. The whole color range as seen by human eyes is divided in twelve colors: three primary colors, red, blue, and green; three secondary colors, magenta, yellow, and cyan; and six tertiary colors, rose, orange, chartreuse green, spring green, azure, and violet.

In one embodiment, the steps of adding the first colorant composition into the molten composition and mixing the resulting mixture is performed in a single apparatus, in particular in a pipe, such as a mixing pipe.

The first colorant composition may comprise a solvent in which the first coloring agent is dissolved or dispersed in. In one embodiment, the solvent comprised in the first colorant composition is water. In one embodiment, the solvent comprised in the first colorant composition is an organic solvent.

In one embodiment, from 0.01 to 1.0 weight% of the first colorant composition, relative to the weight of the molten composition, is added to the molten composition. The amount of the first colorant composition added into the molten composition may depend on factors, such as the recommendation of the supplier of the colorant composition or the coloring agent, and the desired color of the final solid, particles. In one embodiment, from 0.05 to 1.0 weight%, from 0.05 to 0.9 weight% , from 0.05 to 0.8 weight%, from 0.05 to 0.5 weight%, from 0.05 to 0.3 weight% , from 0.01 to 0.8 weight%, from 0.01 to 0.5 weight%, or from 0.1 to 0.3 weight% of the first colorant composition, relative to the weight of the molten composition, is added to the molten composition.

Once the first colorant composition is mixed with the molten composition, the molten composition is directed to a solidification section, where it is transformed into solid particles. The solidification may comprise a mixing step where additional components are added to the molten composition.

In one embodiment, the method comprises the step of adding a component to the molten composition before the solidifying step. In the fertilizer industry, it is common to add different nutrient sources to molten compositions before the solidification, so that the component is evenly dispersed in the molten composition and the solid particles comprise further nutrients.

Most crops require secondary nutrients (magnesium, calcium, and sulphur) and micronutrients (boron, iron, copper, zinc, molybdenum, and manganese) for optimal growth. A fertilizer product comprising several nutrients is considered an advantage since it reduces the number of applications that the farmer has to do. In one embodiment, the method comprises the step of adding a source of secondary nutrient and/or a source of micronutrient to the molten composition before the solidifying step.

In one embodiment, a component selected from the group consisting of ammonium salts, potassium salts, magnesium salts, sulphate salts, and mixtures thereof, is added to the molten composition comprising the first colorant composition before the solidifying step.

Production additives may also be added to the molten composition. Additives may be required to improve the quality of the solid particles, and can be added just before the solidifying step.

Once the molten composition has the required chemical content, it can be solidified into solid particles. A number of methods to achieve that are known in the field. In the fertilizer industry, two popular methods are granulation and prilling. A number of apparatus are also known to perform these methods. For example, granulation can be performed in a drum granulator, a fluidized bed granulator, a mixer-granulator. Prilling can be performed in a prilling tower. Other solidifying apparatus include pugmill, spherodizer and pastillator.

As discussed earlier, the entire batch of colored, solid particles cannot be produced with the presence of a first colorant composition in the molten composition, as this would contaminate the next batch produced in the same system. For example, in a production system, wherein the solidifying step is performed in a prilling tower, some coloring agent can be found at the bottom of the prilling tower where the particles hit the bottom of the tower. If the bottom at the tower contains some coloring agent at the beginning of a new batch of product, the first particles produced are contaminated with that coloring agent.

In order to avoid the problems mentioned above, the addition of the first colorant composition has to stop before all the particles have been produced. In a production plant, operators know how long a production run of a particular product is supposed to run. Based on this information, and other factors, such as the residence time of the molten composition from the point of addition of the first colorant composition and the solidifying step, the operators may decide when the addition of the first colorant composition should be stopped, so that the next batch of solid particles does not contain any trace of the first colorant composition. Some test runs may be performed to find out the optimal moment where the addition has to be stopped, this would be when a maximum of particles with the first colorant composition can be produced with none of particles of the following batch containing a visible trace of the first colorant composition.

Having a batch of particles with a uniform color may be an advantage for several reasons, such as marketing, and/or to facilitate its recognition by operators at the plant and customers. It may also be an advantage is the particles are later subject to a control step, for example to check the quality of the particles and/or their amount, involving photographic sensors.

In one embodiment, the addition of the first colorant composition to the molten composition is stopped when the production time has reached 75 to 95%, 70 to 95% or 80 to 95% of the programmed production time.

In one embodiment, the addition of the first colorant composition to the molten composition is stopped at least one hour before all the colored particles have been produced, in particular from 1.5 to 2.5 hours before all the colored particles have been produced.

Once the addition of the first colorant composition, the color of the molten composition that is solidified slowly returns to its original color. Similarly, the color of the solid particles produced slowly changes towards the original color of the molten composition.

However, it is desired to obtain a batch of particles with the same visual aspect, i.e. the same color, so it was found out that the particles that don't comprise enough or none of the first colorant composition can be subjected to a coating step with a second colorant composition, which comprises a second coloring agent with the same pigment number as the first coloring agent comprised in the first colorant composition, which is added to the molten composition. With such a coating step, all the particles produced during a production run have the same color.

It may be possible that the same coloring agent can be used in the first and second colorant composition, however, the two applications require molecules with different properties: for example, the first colorant composition must tolerate high temperatures, at least 100° C, sometimes at least 120, 130, 140, or 150 °C, depending on the temperature of the molten composition. The first and second colorant composition may comprise different solvents, so the coloring agents may require to have a different solvent solubility properties. So it may happen that the first and second coloring agent are not chemically identical, however, they should have the same pigment number so that the color of the particles containing the first or the second coloring agent have the same color. The tint or shade of the two types of particles, the ones comprising the first coloring agent, and the particles coated with the second coloring agent, may be slightly different.

In one embodiment, the first colorant composition comprises water as solvent. Since the first colorant composition is added to a molten composition, which may comprise water, and may have a temperature above 80 °C, above 100 °C, or even above 120 °C, a water-based composition is preferable to reduce the number of different components in the molten composition. Organic solvents may also react and/or decompose at high temperatures, which may negatively affect the molten composition and/or the final product.

The second colorant composition may comprise a solvent to improve its capacity to cover the solid particles. In one embodiment, the second colorant composition comprises an organic solvent, such as an alcohol and/or a glycol, and/or an oil, such as a mineral oil or a vegetable oil.

In one embodiment, from 0.01 to 1.0 weight% of the second colorant composition, relative to the weight of the particles, is coated to the particles with the first color. The amount of the second colorant composition added into the molten composition may depend on factors, such as the recommendation of the supplier of the colorant composition or the coloring agent, and the desired color of the final solid, particles. In one embodiment, from 0.05 to 1.0 weight%, from 0.05 to 0.9 weight%, from 0.05 to 0.8 weight%, from 0.05 to 0.5 weight%, from 0.05 to 0.3 weight%, from 0.01 to 0.8 weight%, from 0.01 to 0.5 weight%, or from 0.1 to 0.3 weight% of the second colorant composition, relative to the weight of the molten composition, is added to the molten composition.

In one embodiment, the coating of particles with the second colorant composition is performed in a mixing pipe. A mixing pipe is a device comprising a longitudinal body, a main inlet and a main outlet wherein the composition to be colored is introduced and expelled from. It also comprises a secondary inlet for the second colorant composition, and mixing means inside its body that ensures that the molten composition and the second colorant composition are mixed as they progress through the pipe.

The particles coated with the second colorant composition can then be directed to a means for storing, for example a storage hall. The particles coated with the second colorant composition may be stored in the same means for storing as the particles comprising the first colorant composition.

In one embodiment, the method further comprises the step of coating some of the particles produced in step d) with the second colorant composition used in step g). When the production of solid, colored particles begins, the first particles often contain a smaller concentration of the first colorant composition than the envisioned value. This is due to the fact that the production system contains some molten composition without the first colorant composition in the pipes between the point where the first colorant composition is added to the molten composition and the solidification section. It is possible to simply discard these particles, but this is not economically desirable. Instead, it is possible to coat these first particles produced with the second colorant composition to obtain particles with the same color as the rest of the production batch.

In one embodiment, the method can be used to produce green fertilizer particles, in particular green NPK fertilizer particles, and the method comprises the steps of:
a) continuously providing a molten composition comprising nitrogen and phosphorus, in particular wherein the molten composition is an ammonium phosphate melt;
b) continuously adding a first, green, aqueous colorant composition comprising a first green coloring agent with a green pigment number, to the molten composition;
c) continuously mixing the green, aqueous colorant composition with the molten composition, thereby obtaining a green molten composition;
   c1) continuously adding a potassium salt, in particular potassium chloride and/or potassium sulphate, to the molten composition and mixing the resulting mixture;
d) continuously solidifying the composition obtained in step c1), thereby obtaining green fertilizer particles;
e) stopping the addition of the green, aqueous colorant composition to the molten composition;
f) carrying on the solidification of the molten composition, thereby obtaining fertilizer particles;
g) coating the fertilizer particles obtained in step f) with a second green colorant composition comprising a second green coloring agent with the green pigment number of the first green coloring agent, thereby obtaining green fertilizer particles.

The present method can be applied to the production of green NPK fertilizer particles. A NPK fertilizer is a fertilizer that contains the three macronutrient required by crops: nitrogen (N), phosphorus (P), and potassium (K). A method to produce such particles is to first prepare a molten composition comprising nitrogen and phosphorus. For example, such a composition can be obtained by the reaction of phosphoric acid with ammonia. Another option is to first dissolve phosphate rock in nitric acid, and recover the liquid phase of the mixture obtained. Ammonia is then added to the liquid phase, and a composition comprising ammonium ions, phosphate ions and nitrate ions is obtained. This is known as the Odda process or the nitrophosphate process.

Once the molten composition comprising nitrogen and phosphorus is ready, a first colorant composition, in particular a first, green, aqueous colorant composition, is added to the molten composition and mixed with the molten composition. The first, green, aqueous colorant composition comprises a first green coloring agent with a green pigment number.

In one embodiment, the first, green, aqueous colorant composition comprises the pigment Green 7. In one embodiment, the first, green, aqueous colorant composition comprises the chemical compounds with the CAS (Chemical Abstracts Service) number 1328-53-6, or 31235-28-6.

In one embodiment, the molten composition comprising nitrogen and phosphorus has a white, grey, or off-white color.

To the molten composition comprising nitrogen, phosphorus and a colorant, is added a potassium salt. Potassium chloride and potassium sulphate are two potassium salts suitable for fertilizer use.

Additionally, sources of secondary nutrients (magnesium, sulphur, and calcium) and/or micronutrients (boron, copper, iron, molybdenum, manganese, and zinc) can be added to the molten composition while the potassium salt is added to the molten composition.

When the molten composition has the right chemical composition and is homogeneous, it can be taken to the solidifying step, such as a prilling tower or a granulator.

The solidifying step continuously produces green solid particles, such as prills or granules. The produced particles are continuously taken away from the outlet of the solidification section to a storage section. The particles may first be subjecting to a cooling step before being stored.

A fertilizer-producing plant is often producing continuously, i.e. 24 hours a day, different grades of fertilizer. Each production run has a running time determined before it starts depending on factors such as market demand, and/or storage levels. So the operators in control of the production know for how long a certain grade, in particular a certain grade of colored particles, is to be produced. Once 80% to 90% of the production of the green particles has been reached, the addition of the green, aqueous colorant composition to the molten composition is stopped, but the rest of the operations: the addition of the potassium salt, and optionally the sources of secondary nutrients and/or micronutrients, and the solidifying step, continue as before.

The specific moment when the addition of the green, aqueous colorant composition is stopped may depend on factors specific to the plant, for example, the residence time of the melt from the point of addition of the colorant to the solidification system. The longer the residence time, the earlier the addition of the colorant needs to be stopped. A skilled person operating such a production plant may require to test different points for stopping the addition of colorant before finding the optimized one.

Once the addition of the green, aqueous colorant composition stops, the color of the particles produced in the solidifying step slowly returns to the natural color of the molten composition. The particles that do not have the right concentration of colorant composition needs to be coated with a second colorant composition, so that the whole batch of particles has the same color.

The second colorant composition comprises a green coloring agent, in particular a green coloring agent with the same pigment number as the coloring agent comprised in the first colorant composition. The second colorant composition may comprise a solvent in which the first coloring agent is dissolved or dispersed in. In one embodiment, the solvent comprised in the second colorant composition is water. In one embodiment, the solvent comprised in the second colorant composition is an organic solvent.

The particles coated with the second colorant composition are then taken to a storage area, which may be the same area as the particles comprising the first, green, aqueous colorant composition.

In another aspect, the present disclosure provides a production assembly comprising a liquid section arranged to produce a molten composition to be solidified, the liquid section comprising an outlet for a molten composition; a means for adding a colorant composition into a molten composition, connected to the liquid section; a solidification section comprising an inlet for a composition to be solidified, and an outlet for solid particles; wherein the means for adding a colorant composition into a molten composition is connected to the inlet of the solidification section; a means for coating solid particles; a means for storing solid particles; and a means for directing solid particles from the outlet of the solidification section to either the means for coating solid particles or the means for storing solid particles.

The production is suitable to perform the method described above.

The production assembly comprises a liquid section, wherein a molten composition can be prepared. Different methods exist to prepare molten composition, in particular a fertilizer molten composition: a solid or mixture of solids, optionally in the presence of water, can be heated over their melting point to provide a molten composition; an inorganic acid, such as nitric acid, phosphoric acid, or sulphuric acid, or a mixture thereof, can be reacted with a source of ammonia, such as ammonia gas, or ammonia water, to provide a molten composition comprising ammonium ions.

The liquid section, in particular its outlet, is fluidly connected to a means for adding a colorant composition into a molten composition. The means for adding a colorant composition into a molten composition is used to add, and optionally mix at the same time, a colorant composition to a molten composition. The means may be suitable for continuously adding a colorant composition into a molten composition. The means for adding a colorant composition into a molten composition may be a pipe with two inlets, one for the molten composition and one for the colorant composition, and one outlet. It may also comprise means for mixing the colorant composition with the molten composition, for example internal parts that increase the flow turbulence. The means for adding a colorant composition may also be a mixing tank.

The means for adding a colorant composition into a molten composition comprises a means for regulating the addition of the colorant composition, such as a valve, so that the addition of colorant can be turned on and off.

The outlet of the means for adding a colorant composition into a molten composition is fluidly connected to the solidification section, which transforms a molten composition into a solid, particulate composition. The solidification section may comprise different apparatus to perform such operation. There are different mechanisms to transform a molten composition into a solid, particulate composition, such as granulation, spray-based processes, such as prilling, and compaction. In one embodiment, the solidification section comprises a granulator, such as a drum granulator, or a fluidized bed granulator, a prilling tower, a pugmill, a spherodizer, or an extruder.

The solidification section may also comprise a mixing device and means for adding components to the molten composition. It may be desirable to add further components to the molten composition just before the solidifying step, so that the components spend as little time as possible in the molten composition before being solidified.

The production assembly further comprises a means for coating solid particles; a means for storing solid particles; a means for directing solid particles from the outlet of the solidification section to either the means for coating solid particles or the means for storing solid particles. At the outlet of the solidification section, it should be possible to either transport the particles to a means for storing the particles, such as a storing area, for example a storing hall, or storing hangar, or a container, or to a means for coating solid particles, if the particles do not have a concentration high enough in the first colorant composition.

The means for directing solid particles may comprise conveyor belts and/or product chutes.

The means for coating solid particles may be any device or device assembly suitable for coating solid particles with a colorant composition, in particular a liquid colorant composition. In one embodiment, the means for coating solid particles is a mixing pipe, which is a pipe comprising a longitudinal body, two inlets, one for the solid particles and one for the colorant composition and one outlet for the coated solid particles. The pipe may comprise internal parts, for example internal parts with a helicoidal structure to increase the mixing of the solid particles with the coating composition.

In another aspect, the present disclosure provides a solid, particulate composition comprising homogeneous particles comprising a first coloring agent with a pigment number, and particles comprising an homogeneous core and a coating layer comprising a second coloring agent with the pigment number of the first coloring agent.

In one embodiment, the solid, particulate composition according to the present disclosure produced from the method according to the present disclosure.

Figure 1 is a schematic of a production assembly according to the present disclosure. In one embodiment, the production assembly comprises a liquid section **1** arranged to produce a molten composition to be solidified, in particular a liquid section suitable for performing the nitrophosphate process, i.e. reacting phosphate rock with nitric acid, separating the calcium nitrate from the liquid phase containing phosphoric acid and nitric acid; and adding ammonia to the liquid phase to produce a molten composition, here a NP liquor; a pipe **2,** connected to the liquid section **1,** for adding an aqueous colorant composition into the NP liquor; a solidification section **3** connected to the pipe **2** and comprising a mixing device, wherein additional solid components can be added to the NP liquor, and a prilling tower for solidifying the molten composition; a mixing pipe **5** for coating solid particles; a storage area **6;** and a system **4** of conveyor belts for directing the solid particles from the outlet of the prilling tower to either the mixing pipe **5** or the storage area **6.** In this production assembly, an example of a production run is: the liquid section continuously produces a NP liquor via the nitrophosphate process, a green colorant is added to the NP liquor in the pipe **2.** Potassium chloride is added to the green NP liquor in the mixing device of the solidification section **3** to provide an NPK melt. The NPK melt is solidified in the prilling tower. The first NPK particles produced do not contain enough green colorant due to residual melt in the pipes, so the first particles produced in the prilling tower are directed to the mixing pipe **5** to be coated with a second colorant composition. After one hour of production, the particles coming out of the prilling tower have the desired color and are sent directly to the storage area. Two hours before the end of the production run, the addition of green colorant in the pipe **2** is stopped. The particles produced by the prilling tower are directed to the mixing pipe **5** to be coated with the second green colorant composition.

## Claims

1. A method for the continuous production of colored particles, comprising the steps of:
a) continuously providing a molten composition with a first color;
b) continuously adding a first colorant composition comprising a first coloring agent with a pigment number, to the molten composition;
c) continuously mixing the first colorant composition with the molten composition, thereby obtaining a molten composition with a second color;
d) continuously solidifying the molten composition with the second color, thereby btaining particles with the second color;
e) stopping the addition of the first colorant composition to the molten composition;
f) carrying on the solidification of the molten composition, thereby obtaining particles with the first color;
g) coating the particles obtained in step f) with a second colorant composition comprising a second coloring agent with the pigment number of the first coloring agent, thereby obtaining particles with the second color.

2. The method according to claim 1, comprising the step of coating some of the particles produced in step d) with the second colorant composition used in step g).

3. The method according to claim 1 or 2, wherein the addition of the first colorant composition to the molten composition is stopped when the production time has reached 75 to 95% of the programmed production time.

4. The method according to any one of claims 1 to 3, wherein the addition of the first colorant composition to the molten composition is stopped at least one hour before all the colored particles have been produced, in particular from 1.5 to 2.5 hours before all the colored particles have been produced.

5. The method according to any one of claims 1 to 4, wherein steps b) and c) are done in a pipe, in particular a mixing pipe.

6. The method according to any one of claims 1 to 5, wherein granulating the molten composition with the first or second color is done in a granulator or a prilling tower.

7. The method according to any one of claims 1 to 6, wherein step g) is performed in a mixing pipe.

8. The method according to any one of claims 1 to 7, wherein, in step b), from 0.01 to 1.0 weight% of the first colorant composition, relative to the weight of the molten composition, is added to the molten composition.

9. The method according to any one of claims 1 to 8, wherein, in step g), from 0.01 to 1.0 weight% of the second colorant composition, relative to the weight of the particles, is coated to the particles with the first color.

10. The method according to any one of claims 1 to 9, wherein the molten composition provided in step a) comprises a component selected from the group consisting of urea, an ammonium salt, a nitrate salt, a phosphate salt, a potassium salt, and mixtures thereof.

11. The method according to any one of claims 1 to 10 for producing green fertilizer particles, comprising the steps of:
a) continuously providing a molten composition comprising nitrogen and phosphorus;
b) continuously adding a green, aqueous colorant composition comprising a first green coloring agent with a green pigment number, to the molten composition;
c) continuously mixing the green, aqueous colorant composition with the molten composition, thereby obtaining a green molten composition;
d) continuously solidifying the green molten composition, thereby obtaining green fertilizer particles;
e) stopping the addition of the green, aqueous colorant composition to the molten composition;
f) carrying on the solidification of the molten composition, thereby obtaining fertilizer particles;
g) coating the fertilizer particles obtained in step f) with a second green colorant composition comprising a second green coloring agent with the green pigment number of the first green coloring agent, thereby obtaining green fertilizer particles.

12. A production assembly comprising:
- a liquid section **1** arranged to produce a molten composition to be solidified, the liquid section comprising an outlet for a molten composition;
- a means **2** for adding a colorant composition into a molten composition, connected to the liquid section **1;**
- a solidification section **3** comprising an inlet for a composition to be solidified, and an outlet for solid particles; wherein the means **2** for adding a colorant composition into a molten composition is connected to the inlet of the solidification section **3;**
- a means **5** for coating solid particles;
- a means **6** for storing solid particles;
- a means **4** for directing solid particles from the outlet of the solidification section to either the means **5** for coating solid particles or the means **6** for storing solid particles.

13. A solid, particulate composition comprising homogeneous particles comprising a first coloring agent with a pigment number, and particles comprising an homogeneous core and a coating layer comprising a second coloring agent with the pigment number of the first coloring agent.

14. The solid, particulate composition according to claim 13 produced from a method according to any one of claims 1 to 11.
